# EUROPÄISCHE PATENTSCHRIFT

(11) **EP 2 911 915 B1**
(45) Veröffentlichungstag und Bekanntmachung des Hinweises auf die Patenterteilung: **22.03.2017**
(21) Anmeldenummer: 13779737.9
(22) Anmeldetag: 18.10.2013
(51) Int. Cl.: B60R 13/04

(54) **SYSTEM ZUM AUSBILDEN EINER BEFESTIGUNG EINES VERKLEIDUNGSELEMENTES AN EINEM KAROSSERIETEIL EINES FAHRZEUGES**
SYSTEM FOR FORMING A MOUNTING FOR A PANELLING ELEMENT ON A BODY PART OF A VEHICLE
SYSTÈME POUR LA CONFIGURATION D'UNE FIXATION D'UN ÉLÉMENT DE GARNISSAGE SUR UNE PIÈCE DE CARROSSERIE D'UN VÉHICULE

(30) Priorität: 29.10.2012 DE 202012104139 U
(43) Veröffentlichungstag der Anmeldung: 02.09.2015
(73) Patentinhaber: REHAU AG + Co, 95111 Rehau (DE)
(72) Erfinder: UHLIG, Nico, 08529 Plauen (DE)
(86) Internationale Anmeldenummer: PCT/EP2013/003135
(87) Internationale Veröffentlichungsnummer: WO 2014/067625

(56) Entgegenhaltungen:
- DE-A1- 19 530 347
- DE-U1-202005 002 907

## Beschreibung

Die vorliegende Erfindung betrifft ein System zum Ausbilden einer Befestigung eines Verkleidungselementes an einem Karosserieteil eines Fahrzeuges.

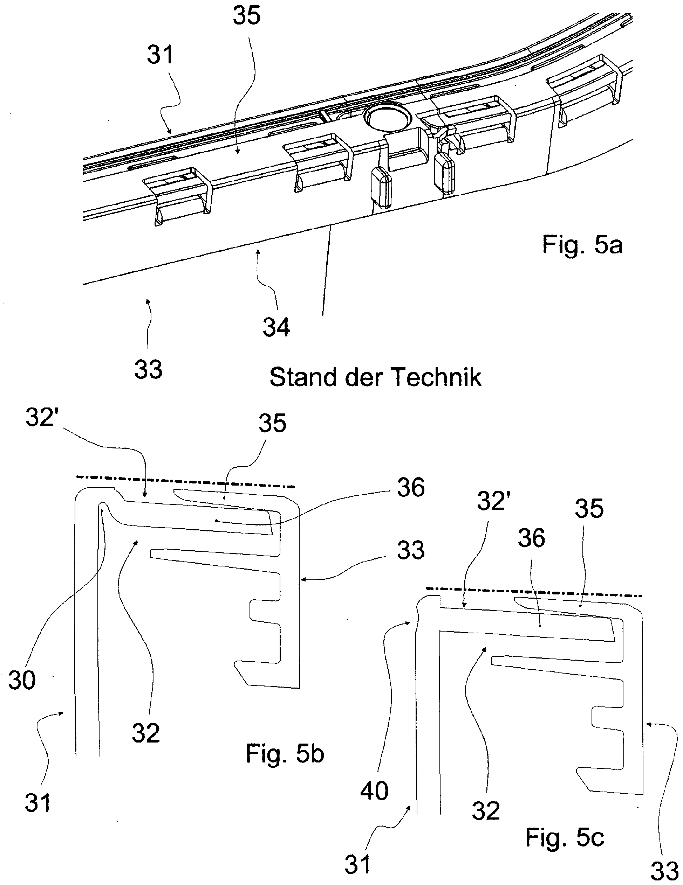

Ein gattungsgemäßes System zum Ausbilden einer Befestigung eines Verkleidungselementes an einem Karosserieteil eines Fahrzeuges ist durch offenkundige Vorbenutzung aus dem Stand der Technik bekannt. Dieses bekannte System wurde beispielsweise in Fahrzeugen der C-Klasse der Daimler AG ab dem Jahr 2007 verbaut und ist in den Figuren 5a und 5b näher dargestellt. Das aus dem Stand der Technik bekannte System zum Ausbilden einer Befestigung eines spritzgegossenen Verkleidungselementes (31) an einem Karosserieteil eines Fahrzeuges umfasst ein Verkleidungselement (31) mit einem Verkleidungselement-Flansch (32), wobei der Verkleidungselement-Flansch (32) eine dem Karosserieteil zugewandte Verkleidungselement-Flanschoberfläche (32') aufweist. Das System umfasst ferner ein Verstärkungselement (33) zur Verstärkung des Verkleidungselement-Flansches (32), wobei das Verstärkungselement (33) im wesentlichen auf der der Verkleidungselement-Flanschoberfläche (32') abgewandten Seite des Verkleidungselement-Flansches (32) angeordnet ist und mindestens ein Verbindungselement (34) zum Verbinden des Verstärkungselementes (33) mit dem Verkleidungselement-Flansch (32) aufweist. Das Verbindungselement (34) weist hierbei mindestens einen Verbindungsflansch (35) auf, der mindestens einen Bereich (36) des Verkleidungselement-Flansches (32) übergreift, wobei der Verbindungsflansch (35) auf den Bereich (36) aufschiebbar ist. Hierbei wird der Bereich (36) zwischen dem übergreifenden Verbindungsflansch (35) und dem Verstärkungselement (33) formschlüssig gehalten (vgl. Schnittdarstellung in Fig. 5b). Ein entsprechendes System ist in der DE 20 2005 002 907 U1 offenbart.

Nachteilig an einem System zum Ausbilden einer Befestigung eines spritzgegossenen Verkleidungselementes an einem Karosserieteil eines Fahrzeuges gemäß des vorstehend beschriebenen Standes der Technik ist, dass zur Vermeidung eines ästhetisch unbefriedigenden Eindruckes des Fahrzeuges das Verstärkungselement (33) nach dem Verbinden des Systems mit dem Karosserieteil des Fahrzeuges von außen nicht mehr sichtbar sein darf.

Bei dem bekannten System ist es daher erforderlich, den Bereich (36) des Verkleidungselement-Flansches (32) im Vergleich zu dem angrenzenden Verkleidungselement (31) so stufenförmig abzusetzen, dass nach dem Aufschieben des Verbindungsflansches (35) auf den Bereich (36) eine im Wesentlichen ebene Fläche zwischen dem vollständig übergreifenden Verstärkungselement (33) und dem angrenzenden Verkleidungselement (31) entsteht, so dass nach erfolgter Montage des Systems an dem Karosserieteil (in Fig. 5b strichpunktartig angedeutet) das Verstärkungselement (33) von dem Verkleidungselement (31) von außen nicht mehr sichtbar verdeckt ist.

Der stufenförmige Absatz des Verkleidungselement-Flansches (32) erfordert bei der Herstellung des Verkleidungselementes (31) allerdings eine aufwändige Werkzeugtechnik, da der von der stufenförmigen Absetzung gebildete Hinterschnitt (30) eine aufwändige Schiebertechnik innerhalb des Spritzguss-Werkzeuges erfordert. Insbesondere bei Verkleidungselement-Flanschen von wenigen Zentimetern kann der Einsatz von Schiebern zudem wirtschaftlich überhaupt nicht möglich sein.

Eine Möglichkeit zur Vermeidung eines Schiebers wäre es gemäß der Schnittdarstellung in Fig. 5c den Flansch 32 zu separieren, d.h. soweit von der Kante des Verkleidungselementes 31 nach unten abzusetzen, dass er unter Vermeidung eines Hinterschnittes unmittelbar und im Wesentlichen senkrecht von der Innenoberfläche des Verkleidungselementes 31 absteht. Hierbei kommt es jedoch aufgrund der Materialanhäufung im Übergang von Flansch 32 zu Verkleidungselement 31 zu einer sogenannten Einfallstelle 40 auf der Sichtseite des Verkleidungselementes 31. Eine übliche Lackierung der Sichtseite des Verkleidungselementes 31 verstärkt diesen nachteiligen optischen Eindruck zusätzlich.

Der vorliegenden Erfindung liegt daher die Aufgabe zugrunde, ein System zum Ausbilden einer Befestigung eines Verkleidungselementes an einem Karosserieteil eines Fahrzeuges anzugeben, welches neben einem optisch zufriedenstellenden Eindruck, einfach montierbar und in der Herstellung kostengünstig und wirtschaftlich ist.

Diese Aufgabe wird erfindungsgemäß durch ein System zum Ausbilden einer Befestigung eines Verkleidungselementes an einem Karosserieteil eines Fahrzeuges gelöst, umfassend ein spritzgegossenes Verkleidungselement mit einem Verkleidungselement-Flansch, wobei der Verkleidungselement-Flansch eine dem Karosserieteil zugewandte Verkleidungselement-Flanschoberfläche aufweist, umfassend ein Verstärkungselement zur Verstärkung des Verkleidungselement-Flansches, wobei das Verstärkungselement auf der der Verkleidungselement-Flanschoberfläche abgewandten Seite des Verkleidungselement-Flansches angeordnet ist und mindestens ein Verbindungselement zum Verbinden des Verstärkungselementes mit dem Verkleidungselement-Flansch aufweist, wobei das Verbindungselement mindestens einen Verbindungsflansch aufweist, der mindestens einen Bereich des Verkleidungselement-Flansches übergreift, wobei der Verbindungsflansch auf den Bereich aufschiebbar ist und wobei der Bereich zwischen dem übergreifenden Verbindungsflansch und dem Verstärkungselement formschlüssig gehalten ist, wobei der Bereich eine zum Randbereich des Verkleidungselement-Flansches hin offene Vertiefung in der Verkleidungselement-Flanschoberfläche mit einer, im Vergleich zu der Wandstärke des Verkleidungselement-Flansches, verringerten Wandstärke bildet und die verringerte Wandstärke des Bereiches und die Wandstärke des Verbindungsflansches so aufeinander abgestimmt sind, dass die Wandstärken im verbundenen Zustand zusammengenommen maximal so groß sind wie die Wandstärke des Verkleidungselement-Flansches.

Erfindungsgemäß kann bei dem beanspruchten System der Verkleidungselement-Flansch ohne eine stufenförmige Absetzung zu dem Verkleidungselement hergestellt werden und gleichzeitig die Forderung erfüllen, dass der Verkleidungselement-Flansch und das Verstärkungselement eine im Wesentlichen ebene Fläche in Bezug zu dem an diesem zu befestigenden Karosserieteil bilden. Im Gegensatz zu einem System des Standes der Technik wird die Kontaktfläche zu dem Karosserieteil nunmehr im Wesentlichen von dem Verkleidungselement-Flansch selbst gebildet. Die Herstellung des spritzgegossenen Verkleidungselementes kann durch den Verzicht auf eine aufwändige Werkzeugtechnik des Spritzgusswerkzeuges kostengünstiger und wirtschaftlicher hergestellt und weiterhin einfach montiert werden. Unter dem Begriff "zum Randbereich hin offen" wird erfindungsgemäß verstanden, dass es sich bei diesem Randbereich um den Randbereich des Verkleidungselemente-Flansches handelt, welcher zur Innenseite des Verkleidungselementes gerichtet ist. Unter Innenseite wird in diesem Zusammenhang die der Sichtseite des Verkleidungselementes gegenüberliegende Seite verstanden, wobei die Sichtseite die im Anbauzustand des Verkleidungselementes von außen sichtbare Seite des Verkleidungselementes darstellt, die zumeist ergänzend mit mindestens einer Lackschicht versehen ist.

Der Bereich weist eine zum Randbereich des Verkleidungselement-Flansches hin offene Ausnehmung auf und das Verbindungselement ist in der Ausnehmung aufgenommen. Durch das Vorsehen einer zum Randbereich des Verkleidungselement-Flansches hin offenen Ausnehmung und das Aufnehmen des Verbindungselementes in selbiger Ausnehmung kann eine sehr kompakte Bauweise des Systems erzielt werden.

Der Rand des Bereiches kann einen Anschlag für den Verbindungsflansch bilden. Alternativ oder in Kombination kann der Rand der Ausnehmung einen Anschlag für das Verbindungselement bilden. In vorteilhafter Weise lässt sich somit einfach verhindern, dass das Verstärkungselement zu weit auf den Verkleidungselement-Flansch aufgeschoben wird.

Vorzugsweise ist das Verbindungselement von einer Befestigungsöffnung zur Aufnahme eines Befestigungsmittels durchsetzt. Alternativ kann eine Befestigungsöffnung auch an einer anderen Stelle des Verstärkungselementes vorgesehen sein. Ein Befestigungsmittel können insbesondere Nieten, Bolzen, Schweißbolzen, Schraubbolzen, Schrauben oder Schweißschrauben sein. Die Befestigungsmittel dienen zur endgültigen Befestigung des Systems an einem Karosserieteil eines Fahrzeuges.

Generell wird ein Verstärkungselement benötigt, um die entsprechenden Montagekräfte des Befestigungsmittels aufzunehmen, ohne dass es zu einem die Funktionsweise beeinträchtigenden Fließen des Kunststoffmaterials des spritzgegossenen Verkleidungselementes kommt. Entsprechend ist das Verstärkungselement vorzugsweise aus einem härteren Material, insbesondere härteren Kunststoffmaterial, im Vergleich zu dem Material des spritzgegossenen Verkleidungselementes gebildet.

Vorteilhaft ist mindestens ein Zentrierelement und mindestens ein Zentriergegenelement vorgesehen, um das Aufschieben des Verbindungsflansches auf den Bereich zu vereinfachen. Das Zentrierelement kann hierbei entweder am Verkleidungselement bzw. Verkleidungselement-Flansch oder an dem Verstärkungselement angeordnet bzw. angeformt sein. Ein entsprechendes Zentriergegenelement befindet sich dann entweder an dem Verstärkungselement oder dem Verkleidungselement.

Der Verkleidungselement-Flansch kann mindestens eine Rastausnehmung und das Verstärkungselement mindestens ein, mit der Rastausnehmung zusammenwirkendes, Rastelement aufweisen, um den Verkleidungselement-Flansch und das Verstärkungselement zueinander zu fixieren. Um ein Herausrutschen bzw. ein Lösen des Verstärkungselementes von dem Verkleidungselement-Flansch vor einer endgültigen Montage des Systems an einem Karosserieteil eines Fahrzeuges zu vermeiden, kann durch Ausbildung einer Rastverbindung das Verstärkungselement an dem Verkleidungselement-Flansch vorfixiert werden.

Vorzugsweise ist auf oder in der Verkleidungselement-Flanschoberfläche ein Karosserie-Zentrierelement vorgesehen. Ein Karosserie-Zentrierelement dient der Erleichterung des Auffindens der Montageposition des Systems in Relation zu dem Karosserieteil eines Fahrzeuges. Das Karosserie-Zentrierelement kann hierbei zum Beispiel als ein von der Verkleidungselement-Flanschoberfläche abstehender Stift oder Bolzen oder Pin ausgebildet sein bzw. eine entsprechende Ausnehmung für einen an dem Karosserieteil angeordneten Stift oder Bolzen oder Pin sein. Alternativ oder in Kombination kann auf oder in dem Verbindungselement mindestens ein entsprechendes Karosserie-Zentrierelement vorgesehen sein.

Der Verkleidungselement-Flansch kann insbesondere durch einen zur Innenseite des Verkleidungselementes abgewinkelten Teilbereich des Verkleidungselementes gebildet sein. Der Verkleidungselement-Flansch ist bevorzugt durch einen zur Innenseite abgewinkelten Kanten-Teilbereich des Verkleidungselementes gebildet. Als Innenseite wird hierbei ebenfalls die der sichtbaren Außenseite des Verkleidungselementes gegenüberliegende Seite verstanden.

Vorzugsweise ist auch das Verstärkungselement in Form eines Kunststoff-Spritzgussteils ausgebildet. Weiter vorzugsweise weist das Verstärkungselement hierbei eine Faser- oder Partikelverstärkung auf. Derartige Faser- oder Partikelverstärkungen sind dem Fachmann hinlänglich bekannt und können insbesondere Glasfasern, Talkum, Kohlenstoff-Russ, Grafit, Silikate und/oder Calciumcarbonat umfassen.

Das Verstärkungselement kann insbesondere aus einem, gegenüber dem Kunststoffmaterial des Verkleidungselementes härteren Kunststoffmaterial bestehen.

Bei dem Verkleidungselement kann es sich insbesondere um eine Stoßfängerverkleidung, oder eine Kotflügelverkleidung oder eine Schwellerverkleidung oder eine Türverkleidung handeln.

Nachfolgend wird die Erfindung anhand lediglich ein Ausführungsbeispiel darstellender Figuren näher erläutert. Es zeigen:
- Fig. 1a und 1b: ein erfindungsgemäßes System vor dem Verbinden von Verstärkungselement und Verkleidungselement-Flansch,
- Fig. 2: das erfindungsgemäße System im verbundenen Zustand,
- Fig. 3a bis 3c: das Aufschieben des Verstärkungselementes auf den Verkleidungselement-Flansch in verschiedenen Stadien,
- Fig. 4a und 4b: eine Schnittdarstellung des in Fig. 2 dargestellten verbundenen Zustandes von Verstärkungselement und Verkleidungselement-Flansch, sowie eine entsprechende Detaildarstellung von Verbindungsflansch und dem Bereich des Verkleidungselement-Flansches,
- Fig. 5a bis 5c: Systeme gemäß dem Stand der Technik.

Gleiche oder funktionsgleiche Elemente sind mit den gleichen Bezugszeichen versehen.

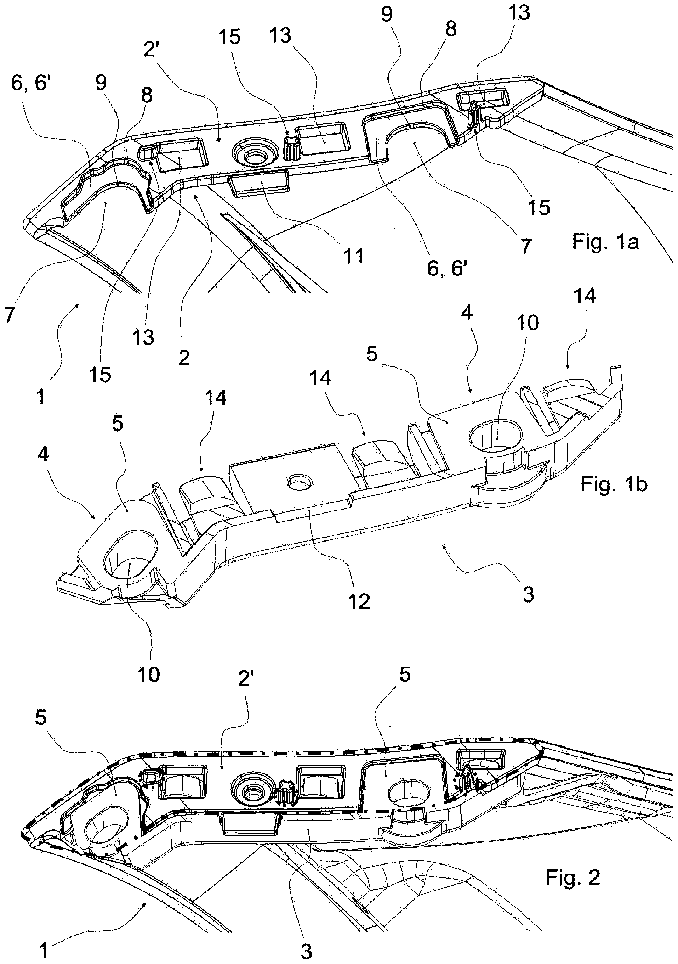

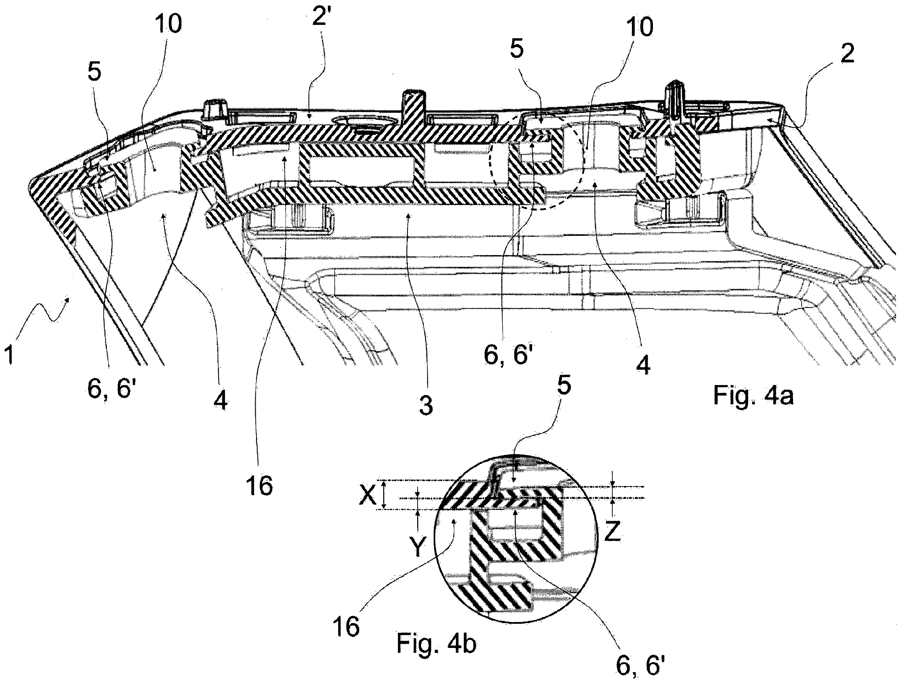

Die Figuren 1 a und 1 b zeigen ein erfindungsgemäßes System zum Ausbilden einer Befestigung eines Verkleidungselementes 1 an einem Karosserieteil (hier nicht näher dargestellt) eines Fahrzeuges. Das System umfasst ein spritzgegossenes Verkleidungselement 1 aus einem Kunststoffmaterial, insbesondere umfassend Polypropylen (PP), weiter bevorzugt umfassend Polypropylen + Ethylen-Propylen-Dien-Kautschuk (PP-EPDM), mit einem Verkleidungselement-Flansch 2, wobei der Verkleidungselement-Flansch 2 eine dem Karosserieteil zugewandte Verkleidungselement-Flanschoberfläche 2' aufweist. Das in Fig. 1 b dargestellte Verstärkungselement 3 zur Verstärkung des Verkleidungselement-Flansches 2, wobei das Verstärkungselement 3 auf der der Verkleidungselement-Flanschoberfläche 2' abgewandten Seite des Verkleidungselement-Flansches 2 angeordnet wird, weist mindestens ein Verbindungselement 4 zum Verbinden des Verstärkungselementes 3 mit dem Verkleidungselement-Flansch 2 auf. Das hier dargestellte Verstärkungselement 3 besteht aus einem, gegenüber dem Kunststoffmaterial des Verkleidungselementes 1 härteren Kunststoffmaterial, vorzugsweise umfassend Polycarbonat (PC), Acrylester-Styrol-Acrylnitril (ASA), Acrylnitril-Butadien-Styrol (ABS) oder Kombinationen der vorgenannten Kunststoffmaterialien. Das Verbindungselement 4 weist hierbei mindestens einen Verbindungsflansch 5 auf, der mindestens einen Bereich 6 des Verkleidungselement-Flansches 2 übergreift, wobei der Verbindungsflansch 5 auf den Bereich 6 aufschiebbar ist. Im verbundenen Zustand von Verstärkungselement 3 und Verkleidungselement-Flansch 2 ist der Bereich 6 zwischen dem übergreifenden Verbindungsflansch 5 und dem Verstärkungselement 3 formschlüssig gehalten. Der Bereich 6 bildet eine zum Randbereich des Verkleidungselement-Flansches 2 hin offene Vertiefung 6' in der Verkleidungselement-Flanschoberfläche 2'. Der Bereich 6 weist eine, im Vergleich zu der Wandstärke X des Verkleidungselement-Flansches 2, verringerte Wandstärke Y auf. Die verringerte Wandstärke Y des Bereiches 6 und die Wandstärke Z des Verbindungsflansches 5 sind so aufeinander abgestimmt, dass die Wandstärken Y, Z im verbundenen Zustand zusammengenommen maximal so groß sind wie die Wandstärke X des Verkleidungselement-Flansches 2 (vgl. Fig. 4b). Wie in Fig. 1 a ersichtlich, weist der Bereich 6 eine zum Randbereich des Verkleidungselement-Flansches 2 hin offene Ausnehmung 7 auf, in welcher das Verbindungselement 4 aufnehmbar ist. Entsprechend zeigt Fig. 2, dass der Bereich 6 eine zum Randbereich des Verkleidungselement-Flansches 2 hin offene Ausnehmung 7 aufweist und das Verbindungselement 4 in der Ausnehmung 7 aufgenommen ist. Der Rand 8 des Bereiches 6 bildet einen Anschlag für den Verbindungsflansch 5 und der Rand 9 der Ausnehmung 7 bildet einen Anschlag für das Verbindungselement 4. Das Verbindungselement 4 ist von einer Befestigungsöffnung 10 zur Aufnahme eines hier nicht näher dargestellten Befestigungsmittels durchsetzt. Von dem Randbereich des Verkleidungselement-Flansches steht ein Zentrierelement 11 in Form einer Zunge ab. Ein entsprechendes Zentriergegenelement 12 in Form einer Ausnehmung vereinfacht das Aufschieben des Verbindungsflansches 5 auf den Bereich 6. Der Verkleidungselement-Flansch 2 weist mehrere Rastausnehmungen 13 und das Verstärkungselement 3 mehrere, mit den Rastausnehmungen 13 zusammenwirkende, Rastelemente 14 auf, um den Verkleidungselement-Flansch 2 und das Verstärkungselement 3 zueinander zu fixieren (vgl. Fig. 2). Auf der Verkleidungselement-Flanschoberfläche 2' sind mehrere Karosserie-Zentrierelemente 15 vorgesehen. Alternativ können entsprechende Karosserie-Zentrierelemente auch auf dem Verbindungselement 4 vorgesehen sein und ebenfalls in Richtung des Karosserieteils eines Fahrzeuges weisen an dem das System befestigt werden soll. Der Verkleidungselement-Flansch 2 ist durch einen zur Innenseite des Verkleidungselementes 1 abgewinkelten Teilbereich des Verkleidungselementes 1 gebildet. Das Verstärkungselement 3 ist in Form eines Kunststoff-Spritzgussteils ausgebildet, wobei das Kunststoff-Spritzgussteil eine Faser- und/oder Partikelverstärkung aufweist. Das in dem Ausführungsbeispiel dargestellte Verkleidungselement ist eine Stoßfängerverkleidung. Alternativ kann das Verkleidungselement 1 auch eine Kotflügelverkleidung oder eine Türverkleidung oder eine Schwellerverkleidung sein. In Fig. 2 ist der verbundenen Zustand von Verkleidungselement-Flansch 2 und Verstärkungselement 3 gezeigt, sowie mit einer Strichpunktlinie der Kontaktbereich zu dem Karosserieteil des Fahrzeuges angedeutet, wobei im Bereich der Karosserie-Zentrierelemente 15 entsprechende Ausnehmungen in dem Karosserieteil (in der Regel ein Kunststoff- oder Blechteil) vorgesehen sind.

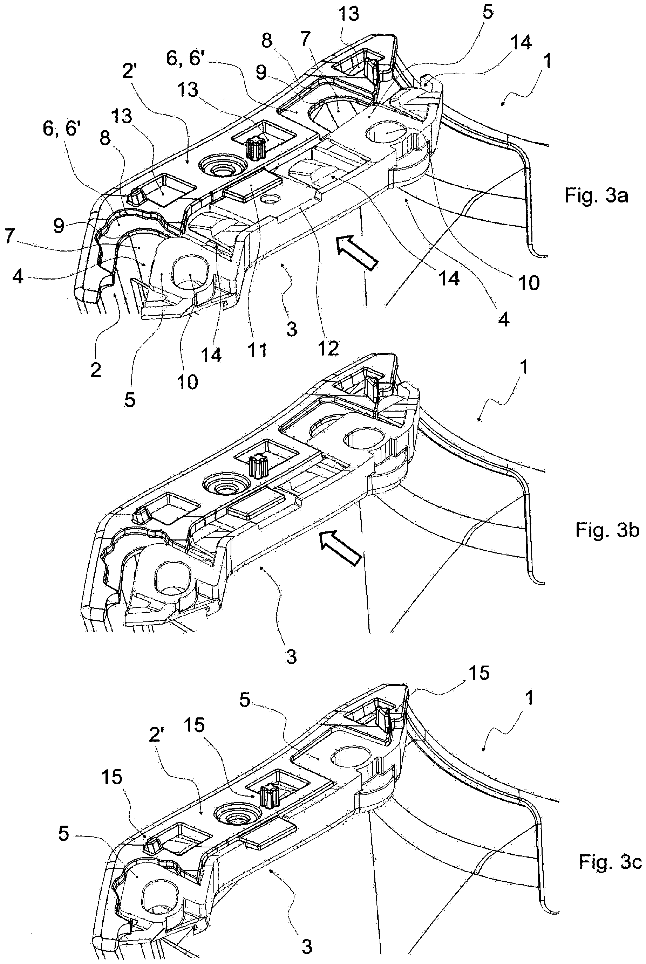

Die Fig. 3a bis 3c zeigen die zeitliche Abfolge des Aufschiebens (angedeutet durch Doppelpfeil) des Verstärkungselementes 3 auf den Verkleidungselement-Flansch 2. Im dem in Fig. 3c dargestellten verbundenen Zustand ist erkennbar, dass die Kontaktfläche des Systems zu dem Karosserieteil im wesentlichen nur durch den Verkleidungselement-Flansch 2 bzw. die Verkleidungselement-Flanschoberfläche 2' gebildet wird. Lediglich die Verbindungsflansche 5 bilden dann einen Teil der Kontaktfläche, wenn die Wandstärken Z und Y zusammen genommen genauso groß sind wie die Wandstärke X des Verkleidungselement-Flansches 2 (vgl. auch Fig. 4a und 4b).

Die Fig. 4a zeigt eine Schnittdarstellung des in Fig. 2 bzw. Fig. 3c dargestellten verbundenen Zustandes von Verstärkungselement 3 und Verkleidungselement-Flansch 2, und die Fig. 4b eine entsprechende Detaildarstellung des in Fig. 4a gestrichelt eingekreisten Abschnittes von Verbindungsflansch 5 und dem Bereich 6 des Verkleidungselement-Flansches 2. Das Verbindungselement 4 weist hierbei mindestens einen Verbindungsflansch 5 auf, der mindestens einen Bereich 6 des Verkleidungselement-Flansches 2 übergreift, wobei der Verbindungsflansch 5 auf den Bereich 6 aufschiebbar ist. Im verbundenen Zustand von Verstärkungselement 3 und Verkleidungselement-Flansch 2 ist der Bereich 6 zwischen dem übergreifenden Verbindungsflansch 5 und dem Verstärkungselement 3 formschlüssig gehalten. Das Verstärkungselement 3 liegt hierbei an der der Verkleidungselement-Flanschoberfläche 2' gegenüberliegenden Verkleidungselement-Flanschunterseite 16 zumindest abschnittsweise an. Wie in der Detaildarstellung in Fig. 4b ersichtlich weist der Bereich 6 eine, im Vergleich zu der Wandstärke X des Verkleidungselement-Flansches 2, verringerte Wandstärke Y auf. Die verringerte Wandstärke Y des Bereiches 6 und die Wandstärke Z des Verbindungsflansches 5 sind so aufeinander abgestimmt, dass die Wandstärken Y, Z im verbundenen Zustand zusammengenommen maximal so groß sind wie die Wandstärke X des Verkleidungselement-Flansches 2.

Die Fig. 5a bis Fig. 5c zeigen die vorstehend erläuterten Systeme zum Ausbilden einer Befestigung eines Verkleidungselementes an einem Karosserieteil eines Fahrzeuges gemäß dem Stand der Technik.

## Patentansprüche

1. System zum Ausbilden einer Befestigung eines Verkleidungselementes (1) an einem Karosserieteil eines Fahrzeuges umfassend:
- ein spritzgegossenes Verkleidungselement (1) mit einem Verkleidungselement-Flansch (2), wobei der Verkleidungselement-Flansch (2) eine dem Karosserieteil zugewandte Verkleidungselement-Flanschoberfläche (2') aufweist,
- ein Verstärkungselement (3) zur Verstärkung des Verkleidungselement-Flansches (2), wobei das Verstärkungselement (3) auf der der Verkleidungselement-Flanschoberfläche (2') abgewandten Seite des Verkleidungselement-Flansches (2) angeordnet ist und mindestens ein Verbindungselement (4) zum Verbinden des Verstärkungselementes (3) mit dem Verkleidungselement-Flansch (2) aufweist,
- wobei das Verbindungselement (4) mindestens einen Verbindungsflansch (5) aufweist, der mindestens einen Bereich (6) des Verkleidungselement-Flansches (2) übergreift, wobei der Verbindungsflansch (5) auf den Bereich (6) aufschiebbar ist und,
- wobei der Bereich (6) zwischen dem übergreifenden Verbindungsflansch (5) und dem Verstärkungselement (3) formschlüssig gehalten ist,
**dadurch gekennzeichnet, dass**
- der Bereich (6) eine zum Randbereich des Verkleidungselement-Flansches (2) hin offene Ausnehmung (7) aufweist und das Verbindungselement (4) in der Ausnehmung (7) aufgenommen ist und,
- der Bereich (6) eine zum Randbereich des Verkleidungselement-Flansches (2) hin offene Vertiefung (6') in der Verkleidungselement-Flanschoberfläche (2') mit einer, im Vergleich zu der Wandstärke (X) des Verkleidungselement-Flansches (2), verringerten Wandstärke (Y) bildet und,
- die verringerte Wandstärke (Y) des Bereiches (6) und die Wandstärke (Z) des Verbindungsflansches (5) so aufeinander abgestimmt sind, dass die Wandstärken (Y, Z) im verbundenen Zustand zusammengenommen maximal so groß sind wie die Wandstärke (X) des Verkleidungselement-Flansches (2), wobei
der Verkleidungselement-Flansch (2) und das Verstärkungselement (3) eine im Wesentlichen ebene Fläche in Bezug zu dem an diesem zu befestigenden Karosserieteil bilden.

2. System nach Anspruch 1, **dadurch gekennzeichnet, dass** der Rand (8) des Bereiches (6) einen Anschlag für den Verbindungsflansch (5) und/oder der Rand (9) der Ausnehmung (7) einen Anschlag für das Verbindungselement (4) bildet.

3. System nach einem der vorstehenden Ansprüche, **dadurch gekennzeichnet, dass** das Verbindungselement (4) von einer Befestigungsöffnung (10) zur Aufnahme eines Befestigungsmittels durchsetzt ist.

4. System nach einem der vorstehenden Ansprüche, **dadurch gekennzeichnet, dass** mindestens eine Zentrierelement (11) und mindestens ein Zentriergegenelement (12) vorgesehen ist, um das Aufschieben des Verbindungsflansches (5) auf den Bereich (6) zu vereinfachen.

5. System nach einem der vorstehenden Ansprüche, **dadurch gekennzeichnet, dass** der Verkleidungselement-Flansch (2) mindestens eine Rastausnehmung (13) und das Verstärkungselement (3) mindestens ein mit der Rastausnehmung (13) zusammenwirkendes Rastelement (14) aufweist, um den Verkleidungselement-Flansch (2) und das Verstärkungselement (3) zueinander zu fixieren.

6. System nach einem der vorstehenden Ansprüche, **dadurch gekennzeichnet, dass** auf oder in der Verkleidungselement-Flanschoberfläche (2') und/oder auf oder in dem Verbindungselement (4) mindestens ein Karosserie-Zentrierelement (15) vorgesehen ist.

7. System nach einem der vorstehenden Ansprüche, **dadurch gekennzeichnet, dass** der Verkleidungselement-Flansch (2) durch einen zur Innenseite des Verkleidungselementes (1) abgewinkelten Teilbereich des Verkleidungselementes (1) gebildet ist.

8. System nach einem der vorstehenden Ansprüche, **dadurch gekennzeichnet, dass** das Verstärkungselement (3) in Form eines Kunststoff-Spritzgussteils, vorzugsweise mit einer Faser- und/oder Partikelverstärkung, ausgebildet ist.

9. System nach einem der vorstehenden Ansprüche, **dadurch gekennzeichnet, dass** das Verkleidungselement (1) eine Stoßfängerverkleidung ist.

## Claims

1. System for forming a fastening of a trim part (1) on a body part of a vehicle, comprising:
- an injection-moulded trim part (1) with a trim part flange (2), wherein the trim part flange (2) has a trim part flange surface (2') facing the body part,
- a reinforcing element (3) for reinforcing the trim part flange (2), wherein the reinforcing element (3) is arranged on the side of the trim part flange (2) that faces away from the trim part flange surface (2') and has at least one connecting element (4) for connecting the reinforcing element (3) to the trim part flange (2),
- wherein the connecting element (4) has at least one connecting flange (5) which engages over at least one region (6) of the trim part flange (2), wherein the connecting flange (5) can be pushed onto the region (6), and
- wherein the region (6) between the connecting flange (5) engaging thereover and the reinforcing element (3) is held with a form fit,
**characterized in that**
- the region (6) has a cutout (7) which is open to the edge region of the trim part flange (2) and the connecting element (4) is received in the cutout (7), and
- the region (6) forms a depression (6') in the trim part flange surface (2') that is open to the edge region of the trim part flange (2) and has a wall thickness (Y) which is reduced by comparison with the wall thickness (X) of the trim part flange (2), and
- the reduced wall thickness (Y) of the region (6) and the wall thickness (Z) of the connecting flange (5) are tailored to one another such that the wall thicknesses (Y, Z) taken together in the connected state are at most as large as the wall thickness (X) of the trim part flange (2), wherein
the trim part flange (2) and the reinforcing element (3) form a substantially planar area with respect to the body part to be fastened thereon.

2. System according to Claim 1, **characterized in that** the edge (8) of the region (6) forms a stop for the connecting flange (5) and/or the edge (9) of the cutout (7) forms a stop for the connecting element (4).

3. System according to one of the preceding claims, **characterized in that** the connecting element (4) is traversed by a fastening opening (10) for receiving a fastening means.

4. System according to one of the preceding claims, **characterized in that** at least one centring element (11) and at least one mating centring element (12) are provided in order to make it easier to push the connecting flange (5) onto the region (6).

5. System according to one of the preceding claims, **characterized in that** the trim part flange (2) has at least one latching cutout (13) and the reinforcing element (3) has at least one latching element (14) interacting with the latching cutout (13), in order to fix the trim part flange (2) and the reinforcing element (3) to one another.

6. System according to one of the preceding claims, **characterized in that** at least one body centring element (15) is provided on or in the trim part flange surface (2') and/or on or in the connecting element (4).

7. System according to one of the preceding claims, **characterized in that** the trim part flange (2) is formed by a subregion of the trim part (1) that is angled off towards the inner side of the trim part (1).

8. System according to one of the preceding claims, **characterized in that** the reinforcing element (3) is designed in the form of a plastic injection-moulded part, preferably with a fibre and/or particle reinforcement.

9. System according to one of the preceding claims, **characterized in that** the trim part (1) is a bumper fascia.

## Revendications

1. Système pour la configuration d'une fixation d'un élément de garnissage (1) sur une pièce de carrosserie d'un véhicule, comprenant:
- un élément de garnissage moulé par injection (1) avec une bride d'élément de garnissage (2), dans lequel la bride d'élément de garnissage (2) présente une surface de bride d'élément de garnissage (2') tournée vers la pièce de carrosserie,
- un élément de renforcement (3) pour le renforcement de la bride d'élément de garnissage (2), dans lequel l'élément de renforcement (3) est disposé sur le côté de la bride d'élément de garnissage (2) détourné de la surface de bride d'élément de garnissage (2') et présente au moins un élément de liaison (4) pour relier l'élément de renforcement (3) à la bride d'élément de garnissage (2),
- dans lequel l'élément de liaison (4) présente au moins une bride de liaison (5), qui recouvre au moins une région (6) de la bride d'élément de garnissage (2), dans lequel la bride de liaison (5) peut être glissée sur la région (6), et
- dans lequel la région (6) est maintenue par emboîtement entre la bride de liaison recouvrante (5) et l'élément de renforcement (3),
**caractérisé en ce que**
- la région (6) présente un évidement (7) ouvert en direction de la région de bord de la bride d'élément de garnissage (2) et l'élément de liaison (4) est logé dans l'évidement (7), et
- la région (6) forme un creux (6') ouvert en direction de la région de bord de la bride d'élément de garnissage (2) dans la surface de bride d'élément de garnissage (2') avec une épaisseur de paroi (Y) réduite par rapport à l'épaisseur de paroi (X) de la bride d'élément de garnissage (2), et
- l'épaisseur de paroi réduite (Y) de la région (6) et l'épaisseur de paroi (Z) de la bride de liaison (5) sont accordées l'une à l'autre de telle manière que les épaisseurs de paroi (Y, Z), considérées ensemble dans l'état assemblé, soient au maximum aussi grandes que l'épaisseur de paroi (X) de la bride d'élément de garnissage (2),
dans lequel la bride d'élément de garnissage (2) et l'élément de renforcement (3) forment une face essentiellement plane par rapport à la partie de carrosserie à y fixer.

2. Système selon la revendication 1, **caractérisé en ce que** le bord (8) de la région (6) forme une butée pour la bride de liaison (5) et/ou le bord (9) de l'évidement (7) forme une butée pour l'élément de liaison (4).

3. Système selon l'une quelconque des revendications précédentes, **caractérisé en ce que** l'élément de liaison (4) est traversé par une ouverture de fixation (10) destinée à recevoir un moyen de fixation.

4. Système selon l'une quelconque des revendications précédentes, **caractérisé en ce qu'**il est prévu au moins un élément de centrage (11) et au moins un contre-élément de centrage (12), pour simplifier le glissement de la bride de liaison (5) sur la region (6).

5. Système selon l'une quelconque des revendications précédentes, **caractérisé en ce que** la bride d'élément de garnissage (2) présente au moins un évidement d'encliquetage (13) et l'élément de renforcement (3) présente au moins un élément d'encliquetage (14) coopérant avec l'évidement d'encliquetage (13), afin de fixer l'un à l'autre la bride d'élément de garnissage (2) et l'élément de renforcement (3).

6. Système selon l'une quelconque des revendications précédentes, **caractérisé en ce qu'**il est prévu sur ou dans la surface de bride d'élément de garnissage (2') et/ou sur ou dans l'élément de liaison (4) au moins un élément de centrage de carrosserie (15).

7. Système selon l'une quelconque des revendications précédentes, **caractérisé en ce que** la bride d'élément de garnissage (2) est formée par une région partielle de l'élément de garnissage (1) repliée vers le côté intérieur de l'élément de garnissage (1).

8. Système selon l'une quelconque des revendications précédentes, **caractérisé en ce que** l'élément de renforcement (3) est réalisé sous la forme d'une pièce moulée par injection en matière plastique, de préférence avec un renforcement par des fibres et/ou des particules.

9. Système selon l'une quelconque des revendications précédentes, **caractérisé en ce que** l'élément de garnissage (1) est un garnissage de pare-chocs.
